# DEMANDE DE BREVET EUROPEEN

(11) **EP 2 360 123 A1**
(43) Date de publication de la demande: **24.08.2011**
(21) Numéro de dépôt: 11151584.7
(22) Date de dépôt: 20.01.2011
(51) Int. Cl.: C02F 3/32

(54) **Système biologique vertical pour l'épuration d'effluents**

(30) Priorité: 21.01.2010 CH 792010
(71) Demandeur: Hepia, 1202 Genève (CH)
(72) Inventeur: Boivin, Pascal, 1134 Chigny (CH); Guiné, Véronique, 74140 Excenevex (FR)
(74) Mandataire: Grosfillier, Philippe

(57) **Abrégé**

Le dispositif pour le traitement des effluents phytosanitaires, comprend au moins un système de collecte des eaux usées (8), un bac de stockage (1), une structure pédologique verticale (2, 3, 4) avec au moins un sol spécifique auto-entretenu combiné à de la végétation à enracinement intégral, un système d'irrigation (6) placé sur le haut de la structure verticale pour irriguer la structure verticale avec les effluents au travers d'une pompe (5) et un système de drainage (7) sur le bas du dispositif qui débouche sur le bac de stockage de façon à arroser le sol depuis le haut et à laisser percoler les eaux au travers du sol jusqu'à leur évapotranspiration complète.

## Description

La présente invention concerne les systèmes d'épuration, plus particulièrement l'épuration d'effluents phytosanitaires et les procédés à cet effet.

La présente invention a pour objectif de traiter les effluents phytosanitaires par exemple des exploitations agricoles dans un dispositif vertical contenant un sol directement irrigué par l'effluent, transpirant l'eau grâce à des plantes et dégradant les pesticides après adsorption par le sol.

Dans le cadre de la présente invention, la notion de sol doit se comprendre comme indiquant un sol naturel agricole, c'est-à-dire contenant notamment de l'humus combiné à des minéraux argileux (pédologiques), de la faune et de la flore du sol. Typiquement, cela peut être le sol qui se trouve à l'endroit où l'installation selon l'invention est mise en oeuvre.

La présente invention utilise les propriétés d'adsorption et de dégradation du sol pour éliminer les pesticides, et des plantes non pour dégrader les pesticides mais pour éliminer l'eau par transpiration, l'effluent servant à irriguer ces plantes. Le sol est entretenu dans ses propriétés par l'activité biologique (pédologique) naturelle.

Les agriculteurs ainsi que les jardiniers sont amenés à utiliser de nombreux traitements phytosanitaires au cours de l'année. La préparation de ces traitements et le lavage des pulvérisateurs génèrent des effluents contenant des produits phytosanitaires dont la dissémination dans l'environnement s'avère très préoccupante: elle représente 50 à 90% de la pollution totale par produits phytosanitaires des rivières. Cela impose donc aux exploitants de traiter ces effluents dans leur exploitation.

Le terme "biobed" (« lit biologique ») et le procédé qu'il met en oeuvre (traitement biologique des effluents phytosanitaires à travers un substrat organique artificiel ou naturel, et végétalisé ou pas) sont connus en soi de nombreuses publications scientifiques et brevets : par exemple US7513997 ; PCT/US2000/003840 ; EP0426160A1 ; PCT/DE2006/000595 ; EP1492733A1.

Les "biobeds" contiennent des substrats spécifiques constitués de terreau enrichi de paille qui contiennent de nombreux microorganismes capables de métaboliser et faire disparaître de nombreux contaminants. En faisant percoler les effluents au travers de tels substrats, l'eau s'épure partiellement de sa charge de contaminants avant d'être libérée dans l'atmosphère par évaporation ou rejetée dans l'environnement. Il convient d'entretenir le "biobed" en ajoutant de la paille et en la brassant régulièrement, On peut estimer la capacité de traitement d'un "biobed" de 500 à 1'000 litres d'eau par année et par m³ de substrat.

Des systèmes de décontamination des eaux usées sont connus dans l'état de la technique, par exemple la demande EP 1 834 929 de Biotisa qui décrit un procédé et un système pour traiter les effluents phytosanitaires des exploitations agricoles contrôlant par automatisme les conditions oxydantes, et avec un entretien réduit. Ce traitement permet de limiter les rejets en substances toxiques dans les écosystèmes naturels.

Un autre exemple est connu de la demande WO 2006/030164. Cette demande décrit un procédé et un dispositif de traitement d'eau, de sols ou d'air pollués, et plus particulièrement un procédé de traitement par une solution végétale c'est-à-dire par phytoremédiation. Le principe de ce procédé, est que les plantes vont soit absorber le contaminant pour le métaboliser ou le stocker, soit réduire voire empêcher la libération du contaminant dans d'autres compartiments de l'environnement. Le plus souvent, les composés organiques (xénobiotiques ou non) peuvent être dégradés et métabolisés pour la croissance de la plante. Selon le procédé décrit dans cette demande, la dépollution dans le cadre d'un procédé de phytoremédiation est améliorée en effectuant un arrosage du lit filtrant planté de manière à organiser des périodes aérobies et anaérobies.

Ce procédé selon de WO 2006/030164 permet ainsi d'améliorer la dégradation des polluants par les microorganismes du fait de cette alternance de période aérobie/anaérobie et de dépolluer sur une courte période (entre 1 et 2 ans) pour les sols, une très courte période pour l'eau (de quelques heures à quelques jours) et un traitement quasi instantané pour l'air.

D'autres procédés sont connus des publications US 4,872,985 et WO 2008/006172.

Les systèmes existants rencontrent trois types de limitations essentielles :
1) Ils doivent occuper un volume et une surface au sol considérables pour assurer l'évaporation des polluants. Cet espace est souvent non disponible.
2) Ils doivent être irrigués très fréquemment avec les effluents pour permettre d'évaporer suffisamment rapidement les effluents. Ceci produit une anoxie dans le biobed, néfaste pour la dégradation microbienne des produits.
3) Etant fortement irrigués et pour la plupart pas végétalisés ou avec une végétation inadaptée, ils évaporent directement l'effluent, et donc pour une part les produits phytosanitaires, produisant donc une pollution atmosphérique.

Le processus de décontamination des eaux usées peut être amélioré en ensemençant le "biobed" avec des plantes à fort enracinement. Ces plantes en association avec un substrat riche en carbone et pauvre en azote vont stimuler la vie microbienne qui va métaboliser les contaminants. Les composés organiques vont être dégradés et métabolisés pour la croissance des bactéries et de la plante. Le polluant est alors éliminé. Dans le cas de composés inorganiques polluants (métaux, métalloïdes ou radionucléides), il ne peut y avoir que phytostabilisation ou phytoextraction car ces types de polluants ne sont pas biodégradables. Dans les Biobeds, on vise l'immobilisation par adsorption sur les composés organiques du substrat.

### SOMMAIRE DE L'INVENTION

La présente invention a pour objectif de traiter les eaux collectées au niveau des places de préparation et de lavage des appareils de traitement phytosanitaire, dans un sol vertical et végétalisé, annulant ainsi les rejets dans les écosystèmes naturels.

Un autre but de la présente invention est de limiter l'encombrement du système par la verticalité.

Un autre but de la présente invention est d'améliorer la performance des systèmes et procédés connus.

Un autre but de la présente invention est de proposer un système simple et efficace (auto entretenu et garantissant des conditions oxydantes) pour le traitement des effluents phytosanitaires.

Selon la présente invention le biobed contient du sol en situation verticale. La surface végétalisée est de ce fait maximisée, ce qui maximise la transpiration de l'eau par les plantes. L'effluent est dégradé dans le sol en position verticale. Le rôle des plantes est de transpirer l'eau et de renouveler la matière organique du sol. L'activité pédologique naturelle (faune et flore) entretient le sol et garantit la conservation de ses propriétés épuratrices.

De préférence, le sol provient de l'exploitation où sera installé le système. Bien entendu, cela ne doit pas être compris de façon limitative et un autre sol ou une combinaison de sols, peuvent être utilisés.

On traite les effluents dans un sol irrigué directement par l'effluent, tandis que les plantes qui poussent sur ce sol transpirent l'eau de l'effluent et renouvellent la matière organique du sol.

On n'utilise pas de phytoremédiation, mais des processus internes au sol (pédoépuration), dans un système isolé et vertical.

Il n'y a aucun renouvellement du sol à assurer. Le fonctionnement est identique à celui d'un sol naturel (à part la position verticale et la surface exposée) et non pas à celui d'un substrat.

Le procédé de l'invention prévient les réactions anoxiques dans le sol sans nécessité de contrôle spécifique (irrigation, oxygénation, etc.),

Le procédé de l'invention évite la volatilisation des effluents phytosanitaires, seule l'eau est évacuée par transpiration des plantes.

Le dispositif et le procédé selon l'invention sont définis par les caractéristiques des revendications.

### BREVE DESCRIPTION DES DESSINS

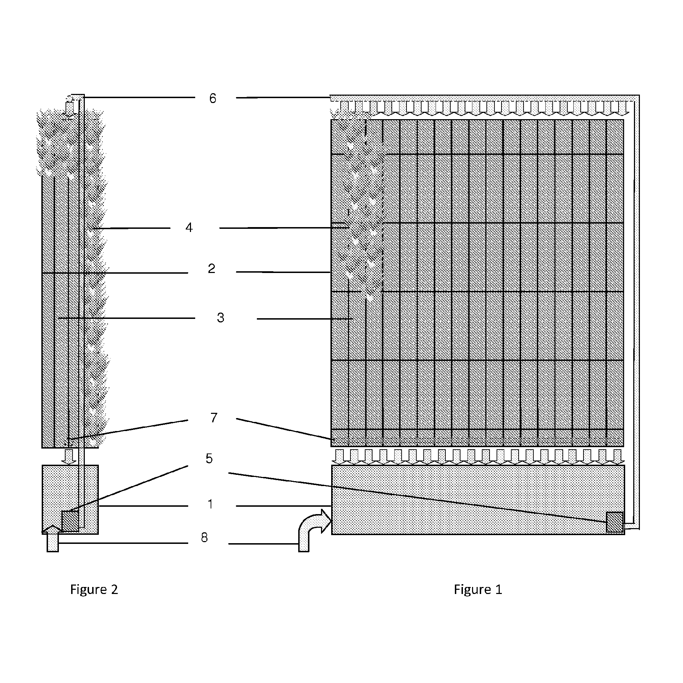

L'invention sera mieux comprise par la description d'un mode de réalisation de celle-ci et des figures qui l'accompagnent, dans lesquelles
La figure 1 est une vue de face d'un mode d'exécution de l'invention et
La figure 2 est une vue de profil d'un mode d'exécution de l'invention.

### DESCRIPTION DETAILLEE

Le système selon l'invention comprend un bac de stockage 1, une structure verticale contenant du sol enrichi ou non en matière organique et entièrement enherbé 2 à 4, par exemple une structure verticale 2, sol 3 et de la végétation 4, un système d'irrigation (pompe immergée 5 + système d'arrosage programmable 6) et un système de drainage 7.

Les eaux de collecte 8 de la place de lavage sont acheminées dans le bac de stockage 1. Ce bac est muni d'une pompe à immersion 5 qui permet d'envoyer les eaux au sommet de la structure verticale de façon à irriguer le système.

A l'intérieur de ce bac, des aménagements particuliers peuvent être envisagés, ces aménagements formant des variantes de réalisation de la présente invention.

On peut prévoir une pompe permettant l'injection d'air dans les eaux collectées dans le bac 1 de façon à limiter les réactions anoxiques qu'il pourrait y avoir dans ce bac mais aussi à favoriser une première biodégradation des produits phytosanitaires. Le cas échéant ces eaux peuvent être ensemencées par un consortium bactérien qui accélèrera la première biodégradation des produits phytosanitaires.

On peut également prévoir un pré filtre (par exemple un lit de sable, de limons fins et de matière organique) permettant de piéger la plupart des métaux lourds. Les métaux s'accumulent et ne peuvent être dégradés, par conséquence, ils peuvent réduire la durée de vie des sols du biobed ; les accumuler dans un pré-filtre permettrait d'allonger la durée de vie du sol.

On peut également prévoir une cloison verticale entre les eaux et le pré filtre.

Ces variantes peuvent bien entendu être utilisées alternativement ou en combinaison.

Les eaux du bac de stockage 1 sont envoyées par la pompe immergée 5 dans le sol de la structure verticale 2, 3, 4. Cette structure 2 remplie de sol 3 est faite de matériaux métalliques, minéraux ou naturels poreux permettant le développement de la végétation au travers (enracinement dans le sol). La végétalisation 4 de cette structure peut se faire sur une ou plusieurs faces selon les besoins et la configuration du système (adossé à un mur ou pas, ...).

Le choix des végétaux 4 est propre à chaque exploitation, mais certains critères doivent de préférence être respectés :
-) transpiration de l'eau importante,
-) non comestibilité des végétaux,
-) croissance végétale favorisant un entretien aisé,
-) tolérance aux traitements phytosanitaires habituellement utilisés dans l'exploitation.

L'ensemencement se fait, par exemple, par projection de graines sur le substrat ou à l'aide de tapis de graines. Une végétation ligneuse type "Saule", "Sureau" ou "Bambou" est envisageable ainsi que d'autres équivalents. Par exemple, on peut utiliser une végétation herbacée pérenne ou non, vivace ou non, ou encore une combinaison des ces végétations. Le maintien du substrat et des végétaux est assuré, par exemple, par une toile de jute ou un géotextile. L'entretien du substrat et de sa perméabilité pourra se faire mécaniquement mais est a priori réalisé par brassage biologique à l'aide notamment de lombrics (entretien biologique des propriétés du sol).

L'apport de l'effluent phytosanitaire 6 dans le sol du biobed se fait par le haut. Une rampe d'irrigation ou un système goutte à goutte (enterré ou non) peuvent être installés. On profite ainsi de la gravité pour obtenir un écoulement du liquide à traiter. La fréquence d'arrosage est prédéterminée et programmée par des moyens appropriés (minuterie etc). Les eaux percolent dans le sol et sont drainées par un système de drainage 7 comprenant des drains et placé à la base de chaque module. Les eaux de drainage sont réintroduites dans le bac de stockage.

L'élimination de l'effluent se fait (a) par évapotranspiration du végétal en ce qui concerne l'eau et (b) par adsorption et dégradation dans le sol pour les pesticides.

La circulation des eaux du bac de stockage se fait jusqu'à la disparition complète des eaux uniquement par transpiration végétale. S'il est nécessaire de remplacer le sol ou s'il n'a plus son utilité dans l'exploitation, un compostage d'une année est préconisé avant épandage au champ.

Le dimensionnement du système se fait en fonction du volume des effluents à traiter. Le by-pass ou le cumul de plusieurs modules verticaux végétalisés selon l'invention est facile ce qui permet de palier les variations d'activité importantes et d'ajuster au mieux le dimensionnement du dispositif mis en oeuvre. Ils peuvent être installés par l'exploitant lui-même. Ils peuvent être collectifs ou individuels.

Les avantages de l'invention sont nombreux. On peut notamment citer
-) la qualité de traitement des effluents phytosanitaires : (i) le traitement se fait à partir d'une irrigation de surface ou enterrée lente, (ii) l'élimination de l'eau se fait uniquement par transpiration ce qui permet d'éviter des rejets toxiques même par volatilisation, tandis que les produits phytosanitaires sont entièrement pédo dégradés. Il n'y a aucun rejet possible dans l'environnement.
-) le système selon l'invention garantit le transfert de la totalité des eaux à traiter dans le sol ce qui garantit une dégradation optimale,
-) le système selon l'invention assure l'absence de réactions anoxiques.
-) Le système selon l'invention est auto entretenu par l'activité pédologique normale du sol, activité que la disposition verticale et la végétalisation visent à garantir. Il est auto-renouvelable du fait de sa structure verticale faite de sol vivant, végétalisé et abritant une flore et faune normales et en équilibre.

Dans la quantité d'effluents traités par rapport à la surface occupée :
-) le système selon l'invention permet de traiter jusqu'à 6 m³/m²/an (végétalisation de toutes les faces) contre 0.6 m³/m²/an pour les systèmes connus et horizontaux (sa structure verticale permet de multiplier par 10 les rendements pour un même encombrement au sol),
-) dans l'absence d'un abri : le système selon l'invention ne nécessite pas la construction d'un abri, pour le protéger des précipitations ou accélérer la biodégradation (chauffage des solutions à traiter),
-) dans la modularité et mobilité du système et sa biodégradabilité qui lui permet d'être installé temporairement sur un chantier de dépollution des eaux, et d'être installé sans permis de construire
-) dans l'esthétique du système proposé que l'on peut utiliser pour former un mur par exemple.

L'invention n'est pas limitée aux modes d'exécution décrits et des variations sont possibles dans le cadre de celle-ci.

Par exemple,
-) l'implantation de végétaux sensibles aux variations d'humidité (sur tout ou une partie du système) pour permettre de vérifier visuellement le bon fonctionnement de l'alimentation en eau du système.
-) La mise en place d'un système adsorbant en amont :
   o pour accumuler les métaux lourds (par exemple lit de sables et de limons fins avec ou sans matière organique), afin de maintenir le même sol en place en évitant l'accumulation d'éléments traces métalliques;
   o pour stocker des eaux qui seraient trop fortement concentrées (par accident) et que l'on diluerait avant injection dans le sol vertical;
-) L'enfouissement du système d'irrigation dans le substrat en cas d'utilisation importante d'herbicides de contact.
-) Le dispositif selon l'invention peut également servir de mur anti-bruit.

Bien entendu, les modes d'exécutions décrits sont donnés à titre d'exemples illustratifs et ne doivent être interprétés de façon limitative. Des modifications, par exemple par l'utilisation de moyens équivalents sont possibles dans le cadre de la protection revendiquée.

## Revendications

1. Dispositif pour le traitement des effluents phytosanitaires, comprenant au moins un système de collecte des eaux usées (8), un bac de stockage (1), une structure verticale (2, 3, 4) avec au moins un sol supportant de la végétation à enracinement intégral colonisant tout le sol, un système d'irrigation (6) placé sur le haut de la structure verticale pour irriguer le sol vertical avec les effluents au moyen d'une pompe (5) et un système de drainage (7) sur le bas du dispositif qui débouche sur le bac de stockage de façon à arroser le sol depuis le haut et à laisser percoler les effluents résiduels au travers du sol jusqu'à leur évapotranspiration complète.

2. Dispositif entièrement auto-renouvelable du fait de sa structure verticale faite de sol vivant.

3. Dispositif selon l'une des revendications précédentes, dans lequel le sol de l'exploitation est auto-entretenu par les racines de la végétation évapotranspirante et l'activité biologique interne.

4. Dispositif selon l'une des revendications précédentes, **caractérisé par** un renouvellement dans le sol de la matière organique grâce au cycle de vie des plantes.

5. Dispositif selon l'une des revendications précédentes, dans lequel la couverture végétale transpirante est de type ligneuse, telle que "saule", "sureau" ou "bambou" et/ou de type herbacée ou pérenne vivace ou non.

6. Dispositif selon l'une des revendications précédentes, comprenant une pompe supplémentaire pour injecter de l'air dans les eaux usées collectées pour éviter les réactions anoxiques.

7. Dispositif selon l'une des revendications précédentes, comprenant un pré-filtre pour les eaux collectées, afin de piéger la plupart des métaux lourds.

8. Dispositif selon la revendication précédente, dans lequel le pré-filtre est formé de sable et/ou de limons et/ou de matière organique.

9. Dispositif selon l'une des revendications précédentes, comprenant un système de pré-dilution des eaux collectées.

10. Dispositif selon l'une des revendications précédentes, contenant des lombrics pour améliorer le brassage du sol et régénérer sa structure.

11. Procédé pour le traitement des effluents phytosanitaires, dans un dispositif comprenant au moins un système de collecte des eaux usées, un bac de stockage, une structure pédologique verticale avec au moins un sol spécifique auto-entretenu combiné à de la végétation à enracinement intégral, un système d'irrigation placé sur le haut de la structure verticale, procédé selon lequel on irrigue la structure verticale avec les effluents au travers d'une pompe et un système de drainage sur le bas du dispositif qui débouche sur le bac de stockage de façon à arroser le sol depuis le haut et à laisser percoler les eaux au travers du sol jusqu'à leur évapotranspiration complète.

12. Procédé selon la revendication 11, dans lequel les eaux usées collectées sont pré-filtrées avant l'étape d'irrigation.

13. Procédé selon la revendication 11 ou 12, dans lequel les eaux usées collectées sont pré-diluées avant l'étape d'irrigation.
